# EUROPÄISCHE PATENTSCHRIFT

(11) **EP 1 388 406 B1**
(45) Veröffentlichungstag und Bekanntmachung des Hinweises auf die Patenterteilung: **19.10.2005**
(21) Anmeldenummer: 03017813.1
(22) Anmeldetag: 05.08.2003
(51) Int. Cl.: B29C 47/22, B29C 47/92

(54) **Verfahren und Vorrichtung zur Herstellung blasgeformter Hohlkörper aus thermoplastischen Kunststoffen**
Method and apparatus for making blow-moulded hollow articles from thermoplastics
Procédé et dispositif pour la fabrication par soufflage de corps creux en matière thermoplastique

(30) Priorität: 09.08.2002 DE 10237051
(43) Veröffentlichungstag der Anmeldung: 11.02.2004
(73) Patentinhaber: Kautex Maschinenbau GmbH, 53229 Bonn (DE)
(72) Erfinder: Klein, Martin, 53757 Sankt Augustin (DE); Holzky, Werner, 53842 Troisdorf (DE); Balzer, Martin, Dipl.-Ing., 53727 Sankt Augustin (DE)
(74) Vertreter: Kierdorf, Theodor

(56) Entgegenhaltungen:
- EP-A- 0 740 994
- US-A- 4 472 129
- US-A- 5 156 857
- US-B1- 6 214 268

## Beschreibung

Die Erfindung betrifft zunächst ein Verfahren zur Herstellung blasgeformter Hohlkörper aus thermoplastischen Kunststoffen.

Ein solches Verfahren ist beispielsweise aus der EP 0 158 919, der DE 100 07 870 A1 oder der EP 0 201 045 bekannt.

Aus der US 6,214,268 B1 sind ein Verfahren zur Herstellung blasgeformter Hohlkörper sowie ein Extrusionskopf bekannt, wobei das Verfahren vorsieht, dass ein dreischichtiges Coextrudat intermittierend aus einem Speicherkopf ausgestoßen wird, wobei eine innere Schicht fortlaufend extrudiert wird und wenigstens einer äußere Schicht abschnittsweise oder zeitweise der inneren Schicht aufgegeben wird. Der Extrusionskopf erlaubt in bekannter Art und Weise sowohl die axiale als auch radiale Wanddickensteuerung des Vorformlings.

Ein vergleichbarer Extrusionskopf bzw. ein vergleichbares Extrusionsverfahren ist aus der US-PS 4,472,129 bekannt. Extrusions-Blasen, Extrusions-Saugblasformen sowie ExtrusionsBlasformen mit 3D-Einlegetechnik (abfallarmes Blasen mit manipuliertem Vorformling) finden häufig Anwendung bei der Herstellung von dünnwandigen Rohren mit geringem Durchmesser, die mehrfach im Raum gekrümmt sind, insbesondere mit komplexem Krümmungsverlauf. Hier kommen beispielsweise Kühlmittelrohre für Kfz-Klimaanlagen, Tankeinfüllrohre oder dergleichen in Betracht. Je nach Einbausituation bestehen solche Rohre beispielsweise aus in Längsrichtung hinsichtlich ihrer Flexibilität verschiedenen Materialien oder weisen Durchmessersprünge, Biegezonen und ähnliche bei der Herstellung Komplikationen bereitende Spezialitäten auf.

Derart komplexe Fertigteile bereiten vielfach bei der Herstellung durch Extrusionsblasen Probleme, insbesondere dann, wenn bei dem herzustellenden Fertigartikel an verschiedenen Stellen unterschiedliche Wandstärken vorliegen sollen.

Zur Erzielung unterschiedlicher Wandstärken an dem Fertigteil über dessen Länge ist die sogenannte axiale Wanddickensteuerung mittels Düsenspaltverstellung bekannt. Auf diese Art und Weise lassen sich ohne Weiteres in Extrusionsrichtung Abschnitte des Vorformlingschlauchs mit variierender Wandstärke herstellen.

Die Wanddicke des Vorformlings wird in der Regel in Abhängigkeit des Aufweitvorgangs festgelegt. Wenn der Vorformling auf einen größeren Durchmesser aufgeweitet wird, muss dessen Wandstärke dicker sein, da das Material von einem kleinen Durchmesser auf einen größeren Durchmesser verteilt wird. Falls in bestimmten Bereichen des fertigen Blasteils Verstärkungen gefordert werden, muss der Vorformling auch in diesen Bereichen eine größere Wandstärke aufweisen.

Zur Erzielung unterschiedlicher Wandstärken bezogen auf den Umfang des Vorformlings ist die sogenannte radiale Wanddickensteuerung bekannt. Diese kann beispielsweise bei der Herstellung von räumlich gekrümmten Rohren oder anderen Bauteilen mit räumlich komplexer Struktur vorteilhaft sein, um der unterschiedlichen Materialbeanspruchung und Materialverteilung bei Krümmung des Vorformlings in der Kavität gerecht zu werden. Es ist ohne weiteres ersichtlich, dass das Material in dem kleineren Biegeradius einer Krümmung gestaucht wird, hingegen in dem größeren Biegeradiums einer Krümmung gestreckt wird. Es kann deshalb sinnvoll sein, in dem größeren Biegeradius eine größere Wandstärke vorzusehen, in dem kleineren Biegeradius hingegen eine kleinere Wandstärke.

Der Vollständigkeit halber sei an dieser Stelle erwähnt, dass die axiale und radiale Wanddickensteuerung üblicherweise jeweils nach blasteilspezifisch vorgegebenen Programmen erfolgen.

Bei der Extrusion von schlauchförmigen Vorformlingen mit geringem Durchmesser und geringer Wandstärke lässt sich eine Ringspaltverstellung, insbesondere zur axialen Wanddickensteuerung nur in sehr engen Grenzen durchführen. Wird der Düsenspalt des Extrusionskopfs zu eng, wird hierdurch eine Quellung des Schmelzestrangs erzeugt, wenn dieser aus dem Düsenspalt austritt. Dieses Quellen wird durch einen Spannungsabbau in dem Schmelzstrang hervorgerufen, wenn dieser ins Freie austritt. Ein gewisser Spannungsaufbau wird in dem Extrusionskopf durch sich verringernde Fließwegquerschnitte bis zur engsten Stelle an dem Düsenspalt bewirkt.

Umgekehrt führt eine Vergrößerung des Düsenspaltes über ein gewisses Maß hinaus dazu, dass der etwa zentrisch in der Düsenaustrittsöffnung angeordnete Dorn nicht mehr vollständig von Material umflossen wird, es kommt zu Materialdefiziten am Düsenaustritt, was letztendlich zu unerwünschten Wanddickenvariationen oder zu einem Vollstrang führt.

Diese Effekte sind dem Fachmann hinlänglich bekannt.

Um eine größere Variation der Wandstärke des Vorformlings zu erzielen, ist es bekannt, bedarfsweise mehrere Schmelzstränge zu coextrudieren, wobei die Einspeisung eines zweiten Schmelzestrangs an gleicher Stelle in dem Extrusionskopf wegen des damit einhergehenden Anstiegs von Druck- und Scherkräften problematisch sein kann.

Der Erfindung liegt die Aufgabe zugrunde, ein Verfahren zur Herstellung extrusionsblasgeformter Hohlkörper aus thermoplastischen Kunststoffen sowie eine Vorrichtung zur Durchführung des Verfahrens zu schaffen, die sich besonders zur Herstellung von dünnwandigen Hohlkörpern mit kleinen Durchmessern und räumlich komplexer Struktur eignen.

Die Aufgabe wird zunächst gelöst durch ein Verfahren mit den Merkmalen von Anspruch 1 und eine Extrusionseinrichtung mit den Merkmalen von Anspruch 6.

Unter Einspeisung im Düsenbereich des Extrusionskopfs im Sinne der Erfindung ist die Einspeisung des betreffenden Schmelzestrangs düsenaustrittsnah zu verstehen. Auf diese Art und Weise wird ein unzulässiger Anstieg der Druck- und Scherkräfte durch Coextrusion des zweiten Schmelzestrangs innerhalb des Extrusionskopfs vermieden.

Die Erfindung lässt sich dahingehend zusammenfassen, dass bei einem Verfahren zur Herstellung blasgeformter dünnwandiger Hohlkörper mit verhältnismäßig kleinem Durchmesser während der Extrusion des Vorformlings sowohl eine axiale als auch eine radiale Wanddickensteuerung erfolgt. Die axiale Wanddickensteuerung erfolgt in an sich bekannter Art und Weise durch axiale Dornverstellung. Die axiale Wanddickensteuerung wird überlagert durch eine radiale Wanddickensteuerung, d.h. durch eine Variation der Wanddicke über den Umfang des Vorformlings, wobei je nach Durchmesser des Vorformlings bedarfsweise düsenaustrittsnah die Einspeisung eines zweiten Schmelzestrangs erfolgt. Auf diese Art und Weise lässt sich in Extrusionsrichtung eine Variation der Wandstärke mit verhältnismäßig großer Durchmesserdifferenz am fertigen Blasteil auch bei kleinen Schlauchdurchmessern erzielen. Gleichzeitig lässt sich die Wandstärke des Vorformlings über dessen Umfang variieren, so dass der Vorformling zur Herstellung räumlich komplex gekrümmter Bauteile eine optimale Wanddickenverteilung aufweist.

Zweckmäßigerweise werden Schmelzestränge von etwa gleicher Materialbeschaffenheit coextrudiert. Idealerweise werden der erste und der zweite Schmelzestrang aus demselben thermoplastischen Material bestehen, so dass die Materialstränge sich über die relativ kurze zur Verfügung stehende Mischstrecke nahtlos miteinander vereinigen.

Es ist besonders vorteilhaft, wenn die axiale und radiale Wanddicke des Vorformlings während der Extrusion unabhängig von einander einstellbar sind.

Insbesondere durch die Zuführung des zweiten Schmelzestrangs in dem Düsenbereich, d.h. düsenaustrittsnah, lässt sich auch bei Vorformlingen mit kleinen Durchmessern eine große Wanddickenvariation erzielen.

Auf diese Art und Weise lässt sich trotz einer notwendigerweise beweglichen Lagerung des Düsenbereichs eine düsenspaltnahe Einspeisung eines zusätzlichen Schmelzstrangs erzielen.

Zweckmäßigerweise ist der Düsenkörper bezüglich des Dorns während der Extrusion dezentrierbar oder zentrierbar.

Insbesondere wegen der beweglichen Lagerung des Düsenkörpers'ist es zweckmäßig, wenn die Zufuhrleitung flexibel ist. Diese kann beispielsweise ein semi-rigider Metallschlauch sein.

Vorzugsweise ist in der Zufuhrleitung ein Zwischenspeicher vorgesehen, so dass der zweite Schmelzestrang nach einem vorgegebenen Wanddickenprogramm intermittierend zuführbar ist.

Für die Zufuhr des zweiten Schmelzestrangs in dem Düsenkörper kann stromaufwärts der Ringspaltdüse ein weiterer umlaufend angeordneter Ringspalt vorgesehen sein, der den zweiten Schmelzestrang dem ersten Schmelzestrang koaxial und gleichmäßig über dessen Umfang aufgibt. Denkbar wäre auch das Aufsatteln des zweiten Schmelzestrangs nur über einen Teilumfang des ersten Schmelzestrangs.

Zweckmäßigerweise ist der Düsenkörper in einer sich quer zur Extrusionsrichtung erstreckenden Ebene in zwei sich zueinander senkrecht erstreckenden Achsen verschiebbar, so dass eine Dezentrierung des Dorns und der Austrittsöffnung in jeder wünschenswerten Konfiguration möglich ist.

Die Erfindung wird nachstehend an Hand eines in den Zeichnungen dargestellten Ausführungsbeispiels erläutert.

Es zeigen:
- Fig. 1: Eine schematische Teilansicht einer Extrusionseinrichtung gemäß der Erfindung, teilweise im Schnitt,
- Fig. 2: Eine Schnittansicht entlang der Linien II/II Fig. 2,
- Fig. 3: Eine Schnittansicht entlang der Linien III/III Fig. 1,
- Fig. 4: Eine vergrößerte Schnittansicht des Düsenbereichs des in Fig. 1 dargestellten Extrusionkopfs,
- Fig. 5: Einen Schnitt entlang der Linien V/V Fig. IV und
- Fig. 6: Eine schematische Teilansicht einer Extrusionseinrichtung gemäß einem zweiten Ausführungsbeispiel der Erfindung, teilweise im Schnitt.

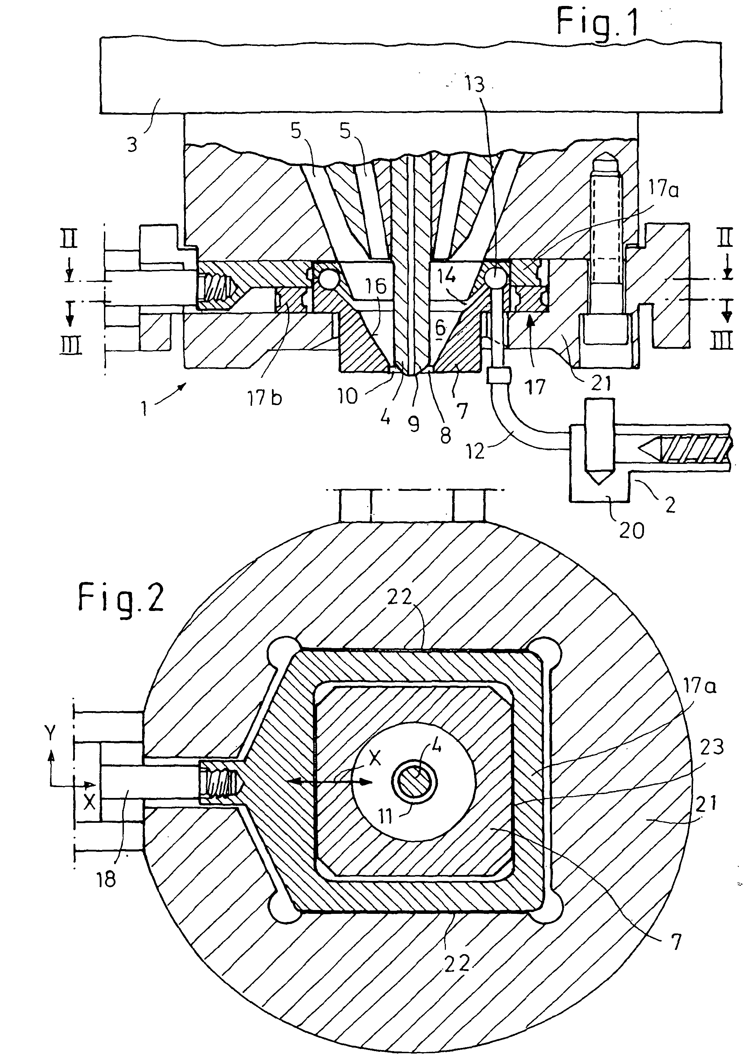

Fig. 1 zeigt eine schematische Ansicht einer Extrusionseinrichtung gemäß der Erfindung, wobei der mit 1 bezeichnete Extrusionskopf in bekannter Art und Weise an einen nicht dargestellten Extruder, nachstehend als erster Extruder bezeichnet, angeschlossen ist. Die Extrusionseinrichtung umfasst weiterhin einen zweiten Extruder 2, der in der Zeichnung nur schematisch dargestellt ist und größenmäßig unverhältnismäßig gegenüber dem nur teilweise dargestellten Extrusionskopf 1 zurücktritt.

Der Extrusionskopf 1 umfasst ein Gehäuse 3 sowie einen in dem Gehäuse 3 axial verstellbar gelagerten Dorn 4. Der Dorn 4 ist in dem Gehäuse 3 zentral angeordnet und von Fließkanälen 5 für den Hauptmassestrom an warmplastischem Kunststoff konzentrisch umgeben. Die Fließkanäle 5 sind als umlaufende Ringkanäle ausgebildet. Die Fließkanäle 5 münden in den konischen Düsenbereich 6 des Extrusionskopfs 1, der von einem Düsenkörper 7 mit einer Austrittsöffnung 8 gebildet wird. Die konische Spitze 9 des Dorns 4 bildet mit der Austrittsöffnung 8 des Düsenkörpers 7 eine Ringspaltdüse 10, aus der das warmplastische Extrudat in Form eines Schlauchs austritt.

Das anmeldungsgemäße Verfahren gemäß Ausführungsbeispiel wird als Extrusions-Saugblasverfahren beschrieben, für den Fachmann ist jedoch ersichtlich, dass die nachstehend beschriebenen Verfahrensschritte sowie die hier beschriebene Extrusionseinrichtung ganz allgemein beim Extrusionsblasformen Anwendung finden können.

Das aus der Ringspaltdüse 10 austretende schlauchförmige Extrudat wird in ein unterhalb des Extrusionskopfs 1 angeordnetes, hier nicht dargestelltes, Werkzeug eingesaugt, welches aus zwei in einer offen- und in eine verriegelbare Schließstellung bewegbaren Formhälften besteht. Zwischen den Formhälften wird eine Artikelkavität gebildet, in die der Schlauch bzw. das schlauchförmige Extrudat mittels einer Saugvorrichtung eingezogen wird. Wenn das Extrudat die Kavität ausfüllt, wird diese bzw. das Werkzeug mittels Schiebern oder dergleichen verschlossen, wonach das Aufblasen des Vorformlings in die durch die Artikelkavität vorgegebene Endform erfolgt.

Dieser Vorgang ist hinlänglich bekannt und ist nicht Gegenstand der vorliegenden Anmeldung, so dass hierauf im folgenden nicht weiter eingegangen wird.

Wie eingangs bereits erwähnt wurde, soll die hier beschriebene Extrusionseinrichtung besonders zur Herstellung von Hohlkörpern, beispielsweise Schläuchen oder Rohren, mit geringer Wandstärke /oder geringem Durchmesser vorgesehen sein. Darüber hinaus soll es sich um Hohlkörper handeln, die eine räumlich komplex gekrümmte Kontur aufweisen. Hierzu ist an dem Extrusionskopf 1 sowohl eine axiale als auch eine radiale Wanddickensteuerung vorgesehen.

Zunächst lässt sich der Dorn 4 axial verstellen, womit unmittelbar die Fläche des Ringspaltes 11 der Ringspaltdüse 10 und somit die Wandstärke des Extrudats einstellbar sind.

Bei großem Hub des Dorns 4 in Richtung einer großen Ringspaltfläche ist es, wie eingangs bereits erwähnt, erforderlich, die Materialzufuhr zu dem Extrusionskopf 1 zu erhöhen. Hierzu ist der mit 2 bezeichnete zweite Extruder vorgesehen, der über eine flexible Schlauchleitung 12 an den Düsenkörper 7 angeschlossen ist. Über einen Zwischenspeicher 20 fördert der zweite Extruder einen Schmelzestrang durch die Schlauchleitung 12 in einen in dem Düsenkörper 7 umlaufenden Ringkanal 13, der wiederum in einem zweiten Ringspalt 14 mündet. Ringspalt 14 ist konzentrisch zu dem Ringraum 15 zwischen Dorn 4 und Innenwandung 16 des Düsenkörpers 7 angeordnet.

Diese Anordnung des Ringspaltes 14 erlaubt es, auf den ersten, durch die Fließkanäle 5 austretenden Schmelzestrang einen konzentrisch diesen umgebenden zweiten Schmelzestrang aufzubringen.

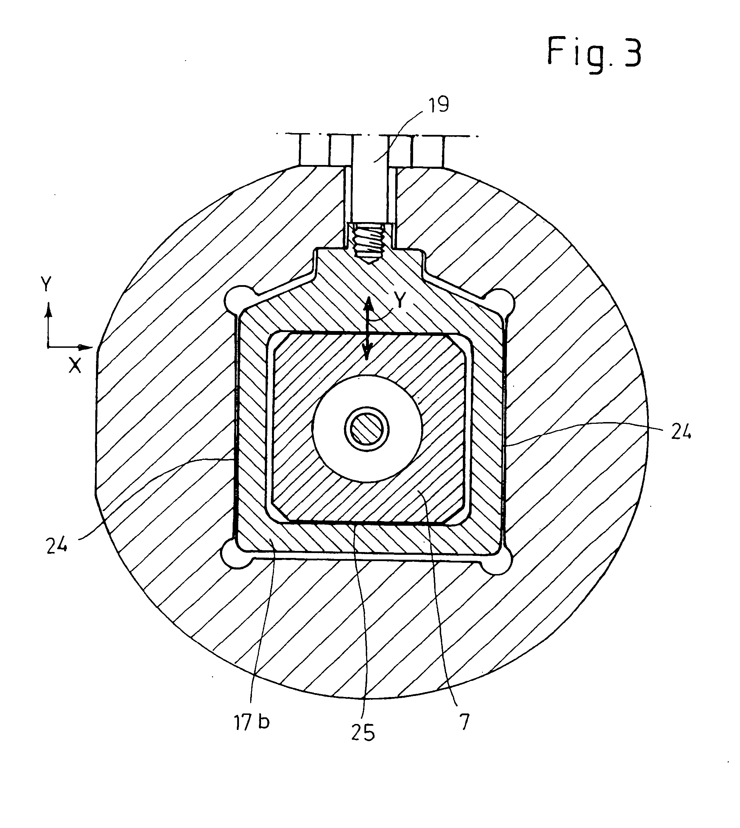

Um während der Extrusion die Wanddicke des Vorformlings über dessen Länge als auch über dessen Umfang variieren zu können, ist der Düsenkörper 7 in einer Ebene senkrecht zur Extrusionsrichtung verschieblich gelagert, und zwar in zwei sich senkrecht zueinander erstreckende Achsen x,y. Hierzu ist der Düsenkörper 5 zwischen dem Gehäuse 3 und einem Düsenhaltering 21 zwecks Abdichtung leicht geklemmt. Die Verstellbarkeit des Düsenkörpers 7 wird über einen zweiteiligen Stellrahmen 17 bewirkt, in welchem der Düsenkörper 7 geführt ist. Der Stellrahmen 17 umfasst einen stromaufwärts des Extrudats angeordneten oberen Stellrahmenteil 17a und einen stromabwärts des Extrudats angeordneten unteren Stellrahmenteil 17b, die miteinander eine Kreuzschlittenführung bilden. Der obere Stellrahmenteil 17a ist über eine erste Stelleinrichtung 18 in x-Richtung verschiebbar, wie dies aus Figur 2 ersichtlich ist. Der obere Stellrahmenteil 17a ist in x-Richtung an der Führungsfläche 22 in dem Düsenhaltering 21 geführt. Der Düsenkörper 7 liegt an den Flächen 23 des oberen Stellrahmenteils 17a an, so dass der Düsenkörper 7 einer Bewegung des oberen Stellrahmenteils 17a in x-Richtung folgt. In y-Richtung bildet der obere Stellrahmenteil 17a bezüglich des Düsenkörpers 7 einen Spalt, so dass der Düsenkörper 7 in y-Richtung Bewegungsfreiheit hat.

Wie aus Figur 3 ersichtlich ist, ist der untere Stellrahmenteil 17b über eine zweite Stelleinrichtung 19 in Y-Richtung verstellbar. Der untere Stellrahmenteil 17b ist in y-Richtung an den Führungsflächen 24 in dem Düsenhaltering 21 geführt. Der Düsenkörper 7 liegt in dem unteren Stellrahmenteil 17b spielfrei gegen die Flächen 25 an, so dass bei Betätigung der zweiten Stelleinrichtung 19 in y-Richtung der Düsenkörper 7 dieser Bewegung folgt. In x-Richtung hat der Düsenkörper 7 in der unteren Stelleinrichtung 17b Spiel.

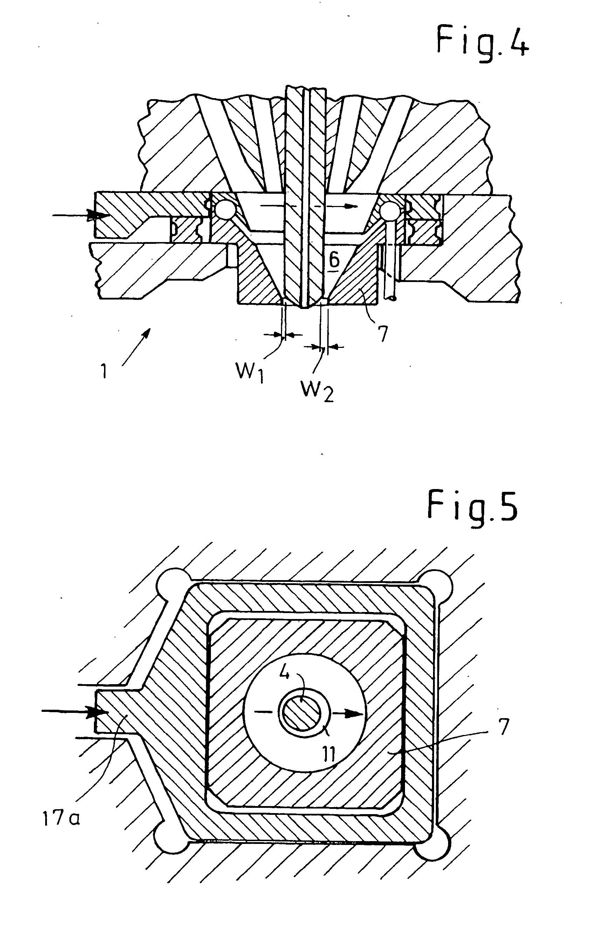

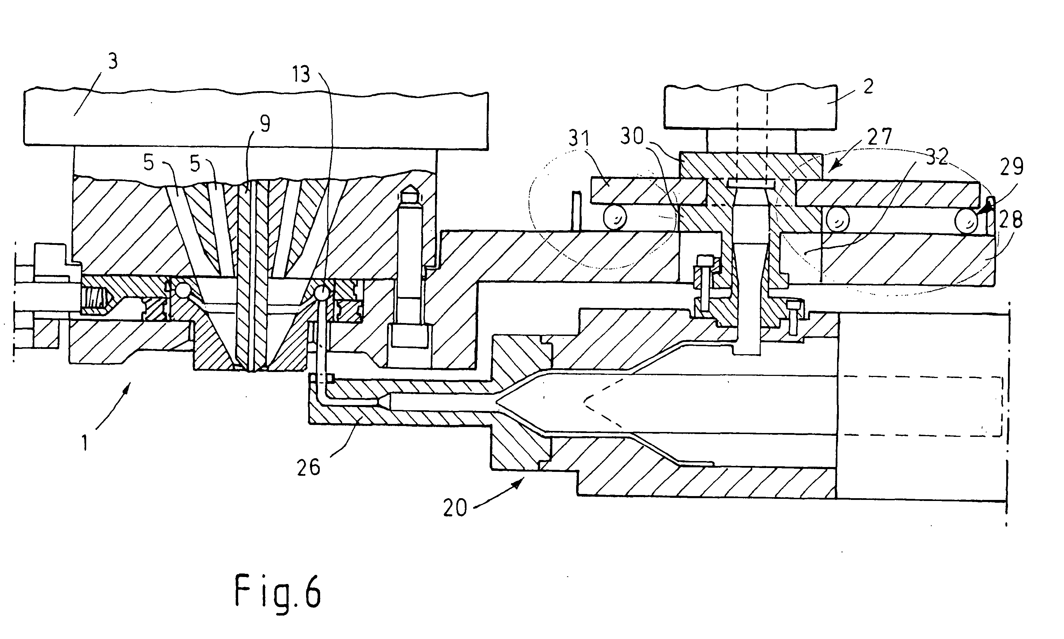

Hierdurch lässt sich die in den Figuren 4 und 5 dargestellten exzentrische Anordnung von Dorn 4 und Austrittsöffnung 8 erzielen. Der Ringspalt 11 hat einerseits eine Spaltweite W1 und auf der diametral gegenüberliegend angeordneten Seite die Spaltweite W2, wobei sich von W1 nach W2 ein kontinuierliche Wandstärkenzunahme des aus der Ringspaltdüse 10 ausgestoßenen Schlauchs ergibt.

Der vorstehend beschriebene und in den Figuren dargestellte Extrusionskopf 1 ermöglicht selbstverständlich auch die sequentielle Extrusion verschiedener Materialien und des Hauptschmelzestrangs bzw. des ersten Schmelzestrangs, weshalb in der Zeichnung zwei ringförmige Fließkanäle 5 konzentrisch zueinander angeordnet sind. Die Extrusionseinrichtung umfasst zwei Extruder, wobei ein Extruder den Hauptschmelzestrom liefert, der andere Extruder den Zusatzschmelzestrom. Dieser zweite Schmelzestrom oder Schmelzestrang wird zeitweise oder abschnittsweise via flexibler Schlauchleitung dem beweglich gelagerten Düsenkörper 7 zugeführt.

In dem dargestellten Ausführungsbeispiel ist in dem Düsenkörper 7 stromaufwärts der Austrittsöffnung ein konzentrisch angeordneter Ringspalt 14 vorgesehen. Es ist aber auch denkbar, dass mehrere in Extrusionsrichtung übereinander bzw. untereinander angeordnete Ringspalte vorgesehen sind.

In Figur 6 ist ein zweites Ausführungsbeispiel der erfindungsgemäßen Extrusionseinrichtung dargestellt. In diesem Fall ist für die Materialzufuhr des zweiten Schmelzestrangs eine feste Leitung 26 vorgesehen, die drehbar an dem Düsenkörper 7 angeschlossen ist.

Um eine Relativbewegung des Düsenkörpers 7 in x- und y-Richtung zuzulassen, sind die feste Leitung 26 und der Zwischenspeicher 20 in einer Ebene, die sich parallel zur Verstellebene des Düsenkörpers 7 erstreckt, verschieblich aufgehängt. Hierzu sind der Zwischenspeicher 20 und der zweite Extruder 2 auf einer an dem Extrusionskopf 1 angeordneten Lagerplatte 28 in x-Richtung und in y-Richtung verschieblich aufgehängt. Im Bereich der Leitung zwischen dem zweiten Extruder 2 und dem Zwischenspeicher 20 ist eine Halteeinrichtung 27 vorgesehen, die mittels Klemmflanschen 30 an einer Schiebeplatte 31 befestigt sind. Zwischen der Schiebeplatte 31 und der Lagerplatte 28 ist eine Kugellagerung 29 vorgesehen, die eine verhältnismäßig leichtgängige Verschiebung dieser zueinander in x-Richtung und in y-Richtung ermöglicht. Hierzu ist in der Lagerplatte 28 ein Durchbruch 32 vorgesehen, durch den sich ein Teil der Halteeinrichtung 27 sowie der Leitung zwischen Zwischenspeicher 20 und Extruder 2 erstrecken. Der Durchbruch 32 ist so bemessen, dass die sich durch diesen erstreckende Halteeinrichtung 27 genügend Spiel hat.

### Bezugszeichenliste

- 1: Extrusionskopf
- 2: Extruder
- 3: Gehäuse
- 4: Dorn
- 5: Fließkanäle
- 6: Düsenbereich
- 7: Düsenkörper
- 8: Austrittsöffnung
- 9: Spitze
- 10: Ringspaltdüse
- 11: Ringspalt
- 12: Schlauchleitung
- 13: Ringkanal
- 14: Ringspalt
- 15: Ringraum
- 16: Innenwandung
- 17: Stellrahmen
- 17a: oberer Stellrahmenteil
- 17b: unterer Stellrahmenteil
- 18: erste Stelleinrichtung
- 19: zweite Stelleinrichtung
- 20: Zwischenspeicher
- 21: Düsenhaltering
- 22, 24: Führungsflächen
- 23, 25: Flächen
- 26: feste Leitung
- 27: Halteeinrichtung
- 28: Lagerplatte
- 29: Kugellagerung
- 30: Klemmflansche
- 31: Schiebeplatte
- 32: Durchbruch

## Patentansprüche

1. Verfahren zur Herstellung blasgeformter Hohlkörper aus thermoplastischem Kunststoff, bei welchem ein schlauchförmiger Vorformling aus einem Extrusionskopf mit verstellbarer Ringspaltdüse ausgestoßen wird und einer ersten Schicht thermoplastischen Materials in Extrusionsrichtung wenigstens abschnitts- bzw. zeitweise eine zweite Schicht thermoplastischen Materials konzentrisch aufgegeben wird und eine Einspeisung des zweiten Schmelzestrangs sowie eine Vereinigung der Schmelzestränge stromabwärts des Eintritts des ersten Schmelzestrangs in den Düsenbereich des Extrusionskopfs erfolgen, wobei während der Extrusion eine radiale Wanddickenvariation des mehrschichtigen Vorformlings mittels Düsenspaltverstellung in einer sich quer zur Extrusionsrichtung erstreckenden Ebene erfolgt, **dadurch gekennzeichnet, dass** die Einspeisung des zweiten Schmelzestrangs in dem quer zur Extrusionsrichtung verstellbaren Bereich der Düse des Extrusionskopfs erfolgt.

2. Verfahren nach einem der Ansprüche 1 oder 2, **dadurch gekennzeichnet, dass** Schmelzestränge gleicher Materialbeschaffenheit coextrudiert werden.

3. Verfahren nach einem der Ansprüche 1 oder 2, **dadurch gekennzeichnet, dass** die axiale und radiale Wanddickenverteilung des Vorformlings während der Extrusion unabhängig voneinander einstellbar sind.

4. Verfahren nach einem der Ansprüche 1 3, **dadurch gekennzeichnet, dass** die axiale und/oder radiale Wanddickenverteilung des Vorformlings nach einem vorgegebenen, produktspezifisch erstellten Programm erfolgt.

5. Verfahren nach einem der Ansprüche 1 - 4, **gekennzeichnet durch** die Volumenstromvariation der Schmelzestränge während der Extrusion.

6. Extrusionseinrichtung, insbesondere zur Durchführung des Verfahrens nach Anspruch 1, mit einem Gehäuse (3), mit einem Dorn (4), wobei Gehäuse (3) und Dorn (4) relativ zueinander axial verstellbar sind, mit wenigstens einem einen Düsenbereich bildenden Düsenkörper (7), dessen Austrittsöffnung (8) mit dem Dorn (4) eine Ringspaltdüse (10) bildet, mit Mitteln zur Zuführung eines zweiten zu einem ersten Schmelzestrang konzentrischen Schmelzestrangs in dem Düsenbereich stromabwärts des Eintritts des ersten Schmelzestrangs in den Düsenkörper sowie mit Mitteln zur Verstellung der Lage des Dorns (4) und der Austrittsöffnung (8) des Düsenkörpers (7) zueinander in einer sich quer zur Extrusionsrichtung erstreckenden Ebene, **dadurch gekennzeichnet, dass** zur Einspeisung des zweiten Schmelzestrangs ein zweiter Extruder (2) vorgesehen ist, der über eine Zufuhrleitung mit dem quer zur Extrusionsrichtung verstellbaren Beresch der Düse des Extrusionskopfs verbunden ist.

7. Extrusionseinrichtung nach Anspruch 6, **dadurch gekennzeichnet, dass** der Düsenkörper (7) bezüglich des Dorns (4) während der Extrusion dezentrierbar ist.

8. Extrusionseinrichtung nach einem der Ansprüche 6 oder 7, **dadurch gekennzeichnet, dass** die Zufuhrleitung flexibel ist.

9. Extrusionseinrichtung nach einem der Ansprüche 6 bis 8, **dadurch gekennzeichnet, dass** in der Zufuhrleitung ein Zwischenspeicher (20) vorgesehen ist.

10. Extrusionseinrichtung nach einem der Ansprüche 6 bis 9, **dadurch gekennzeichnet, dass** für die Zufuhr des zweiten Schmelzestrangs in dem Düsenkörper (7) ein stromaufwärts der Ringspaltdüse (10) angeordneter umlaufender Ringspalt (14) vorgesehen ist.

11. Extrusionseinrichtung nach einem der Ansprüche 6 bis 10, **dadurch gekennzeichnet, dass** der Düsenkörper (7) in einer sich quer zur Extrusionsrichtung erstreckenden Ebene in zwei sich zueinander senkrecht erstreckenden Achsen x,y verschieblich gelagert ist.

12. Extrusionseinrichtung nach einem der Ansprüche 6 oder 7, **dadurch gekennzeichnet, dass** der zweite Extruder (2) in einer sich etwa parallel zur Extrusionsrichtung erstreckenden Ebene beweglich bezüglich des Extrusionskopfes (1) und an diesem gelagert ist, derart, dass dieser eine etwaige Verstellbewegung des Düsenkörpers nachvollziehen kann.

## Claims

1. A method of producing blow-moulded hollow bodies from thermoplastic material wherein a tubular preform is expelled from an extrusion head with an adjustable annular gap nozzle and concentrically applied to a first layer of thermoplastic material in the extrusion direction in at least portion-wise or time-wise manner is a second layer of thermoplastic material and a feed of the second melt extrudate and combination of the melt extrudates are effected downstream of the entry of the first melt extrudate into the nozzle region of the extrusion head, wherein during the extrusion operation a radial variation in wall thickness of the multi-layer preform is effected by means of nozzle gap adjustment in a plane extending transversely with respect to the extrusion direction, **characterised in that** the feed of the second melt extrudate is effected in the region of the nozzle of the extrusion head, which region is adjustable transversely with respect to the extrusion direction.

2. A method according to claim 1 **characterised in that** melt extrudates of the same material nature are co-extruded.

3. A method according to one of claims 1 and 2 **characterised in that** the axial and radial wall thickness distribution of the preform are adjustable independently of each other during the extrusion operation.

4. A method according to one of claims 1 to 3 **characterised in that** the axial and/or radial wall thickness distribution of the preform is effected in accordance with a predetermined, product-specifically written program.

5. A method according to one of claims 1 to 4 **characterised by** a variation in the volume flow of the melt extrudates during the extrusion.

6. An extrusion apparatus, in particular for carrying out the method according to claim 1, comprising a housing (3), a mandrel (4), wherein the housing (3) and the mandrel (4) are displaceable axially relative to each other, at least one nozzle body (7) which forms a nozzle region and whose outlet opening (8) with the mandrel (4) forms an annular gap nozzle (10), means for feeding a second melt extrudate which is in concentric relationship with a first melt extrudate in the nozzle region downstream of the entry of the first melt extrudate into the nozzle body and means for displacing the position of the mandrel (4) and the outlet opening (8) of the nozzle body (7) relative to each other in a plane extending transversely to the extrusion direction, **characterised in that** for the feed of the second melt extrudate there is provided a second extruder (2) which is connected by way of a feed conduit to the region of the nozzle of the extrusion head, which is displaceable transversely with respect to the extrusion direction.

7. An extrusion apparatus according to claim 6 **characterised in that** the nozzle body (7) can be off-centered with respect to the mandrel (4) during the extrusion operation.

8. An extrusion apparatus according to one of claims 6 and 7 **characterised in that** the feed conduit is flexible.

9. An extrusion apparatus according to one of claims 6 to 8 **characterised in that** an intermediate storage means (20) is provided in the feed conduit.

10. An extrusion apparatus according to one of claims 6 to 9 **characterised in that** a peripherally extending annular gap (14) arranged upstream of the annular gap nozzle (10) is provided for the feed of the second melt extrudate in the nozzle body (7).

11. An extrusion apparatus according to one of claims 6 to 10 **characterised in that** the nozzle body (7) is mounted displaceably in a plane extending transversely with respect to the extrusion direction in two axes x, y extending perpendicularly to each other.

12. An extrusion apparatus according to one of claims 6 and 7 **characterised in that** the second extruder (2) is mounted on the extrusion head (1) movably with respect thereto in a plane extending substantially parallel to the extrusion direction in such a way that it can follow any adjustment movement of the nozzle body.

## Revendications

1. Procédé pour fabriquer des corps creux moulés-soufflés en matière thermoplastique, au niveau duquel une préforme tubulaire est produite à partir d'une tête d'extrusion avec une filière à interstice annulaire réglable, sur une première couche de matériau thermoplastique est déposée concentriquement, au moins par endroit ou par moment, dans la direction d'extrusion, une deuxième couche de matériau thermoplastique et une amenée du deuxième jonc de fusion ainsi qu'une union des joncs de fusion s'effectuent dans la zone de la filière de la tête d'extrusion, en aval de l'entrée du premier jonc de fusion, sachant qu'une variation radiale de l'épaisseur de paroi de la préforme multicouche a lieu pendant l'extrusion par un réglage de l'interstice de la filière dans un plan s'étendant perpendiculairement à la direction d'extrusion, **caractérisé en ce que** l'amenée du deuxième jonc de fusion s'effectue dans la zone, réglable perpendiculairement à la direction d'extrusion, de la filière de la tête d'extrusion.

2. Procédé selon la revendication 1, **caractérisé en ce que** les joncs de fusion possédant une qualité de matière identique sont co-extrudés.

3. Procédé selon l'une des revendications 1 ou 2, **caractérisé en ce que** les répartitions radiales et axiales de l'épaisseur de paroi de la préforme peuvent être réglées indépendamment l'une de l'autre pendant l'extrusion.

4. Procédé selon l'une quelconque des revendications 1 à 3, **caractérisé en ce que** la répartition radiale et/ou axiale de l'épaisseur de paroi de la préforme est/sont effectuée(s) suivant un programme établi de façon prédéfinie et spécifique au produit.

5. Procédé selon l'une quelconque des revendications 1 à 4, **caractérisé en** la variation du débit volumique des joncs de fusion pendant l'extrusion.

6. Dispositif d'extrusion, pour réaliser en particulier le procédé selon la revendication 1, avec une carcasse (3), avec un mandrin (4), sachant que la carcasse (3) et le mandrin (4) sont réglables axialement l'un par rapport à l'autre, avec au moins un corps de filière (7) formant une zone de la filière, dont l'orifice de sortie (8) forme avec le mandrin (4) une filière à interstice annulaire (10), avec des moyens pour amener un deuxième jonc de fusion concentrique à un premier jonc de fusion, dans la zone de la filière, en aval de l'entrée du premier jonc de fusion, dans le corps de filière, ainsi que des moyens pour régler ensemble, dans un plan s'étendant perpendiculairement à la direction d'extrusion, la position du mandrin (4) et de l'orifice de sortie (8) du corps de filière (7), **caractérisé en ce que**, pour amener le deuxième jonc de fusion, il est prévu une deuxième extrudeuse (2) reliée à la zone, réglable perpendiculairement à la direction d'extrusion, de la filière de la tête d'extrusion, par une conduite d'amenée.

7. Dispositif d'extrusion selon la revendication 6, **caractérisé en ce que** le corps de filière (7) peut être décentré en référence au mandrin (4) pendant l'extrusion.

8. Dispositif d'extrusion selon l'une des revendications 6 ou 7, **caractérisé en ce que** la conduite d'amenée est souple.

9. Dispositif d'extrusion selon l'une quelconque des revendications 6 à 8, **caractérisé en ce qu'**il est prévu, dans la conduite d'amenée, un réservoir intermédiaire (20).

10. Dispositif d'extrusion selon l'une quelconque des revendications 6 à 9, **caractérisé en ce qu'**il est prévu, pour amener le deuxième jonc de fusion, dans le corps de filière (7), un interstice annulaire (14) circulaire, disposé en amont de la filière à interstice annulaire (10).

11. Dispositif d'extrusion selon l'une quelconque des revendications 6 à 10, **caractérisé en ce que** le corps de filière (7) est placé, de façon mobile, selon deux axes x, y, perpendiculaires l'un à l'autre, dans un plan s'étendant perpendiculairement à la direction d'extrusion.

12. Dispositif d'extrusion selon l'une des revendications 6 ou 7, **caractérisé en ce que** la deuxième extrudeuse (2) est placée dans un plan s'étendant à peu prés parallèlement à la direction d'extrusion, et ce, de façon mobile, par rapport à la tête d'extrusion (1) et au niveau de cette dernière, de telle sorte que celle-ci peut reproduire un éventuel mouvement de déplacement du corps de filière.
